(19) Europäisches Patentamt

European Patent Office

Office européen des brevets

(11) **EP 1 188 309 B1**

(12) **EUROPEAN PATENT SPECIFICATION**

(45) Date of publication and mention
of the grant of the patent:
**20.08.2003 Bulletin 2003/34**

(51) Int Cl.⁷: **H04N 5/232**

(86) International application number:
**PCT/US00/07988**

(21) Application number: **00921452.9**

(22) Date of filing: **24.03.2000**

(87) International publication number:
**WO 00/072584 (30.11.2000 Gazette 2000/48)**

(54) **TARGETABLE AUTOFOCUS SYSTEM**

**AUSRICHTBARES AUTOFOKUSSYSTEM**

**SYSTEME A MISE AU POINT AUTOMATIQUE A VISEE SPECIFIQUE**

(84) Designated Contracting States:
**DE FR GB IT NL SE**

(30) Priority: **21.05.1999 US 316729**

(43) Date of publication of application:
**20.03.2002 Bulletin 2002/12**

(73) Proprietor: **Foveon, Inc.**
**Santa Clara, CA 95051 (US)**

(72) Inventors:
• **MAXHAM, William, Russell**
**San Mateo, CA 94402 (US)**
• **LYON, Richard, F.**
**Los Altos, CA 94022 (US)**
• **PRITCHARD, Jeffrey, Orion**
**San Francisco, CA 94114 (US)**
• **TURNER, Richard, M.**
**Mountain View, CA 94041 (US)**
• **MEAD, Carver, A.**
**Cupertino, CA 95134 (US)**
• **MERRILL, Richard**
**Woodside, CA 95134 (US)**

(74) Representative:
**von Hellfeld, Axel, Dr. Dipl.-Phys. et al**
**Wuesthoff & Wuesthoff**
**Patent- und Rechtsanwälte**
**Schweigerstrasse 2**
**81541 München (DE)**

(56) References cited:
| EP-A- 0 113 392 | EP-A- 0 720 360 |
| WO-A-95/15054 | US-A- 4 814 889 |
| US-A- 5 349 415 | US-A- 5 838 370 |

## Description

### 1. Field of the Invention

The present invention relates to digital imaging devices and to digital cameras. More particularly, the present invention relates to a targetable autofocus system and to a digital camera employing a targetable auto-focus system.

### 2. The Prior Art

Autofocus systems are known in the prior art, particularly as represented in consumer "point and shoot" cameras, and also in professional level single-lens reflex cameras. These systems operate by splitting the image in a small active area in the center of the field of view into two sub-images. These two sub-images are then passed through separate optical paths and compared to produce an electrical error signal that is an odd function of the defocus distance, as is well known by those of ordinary skill in the art. This error signal is used to operate the focus motor of the lens, thereby bringing the sub-image into focus. The direction that the focus motor is to be driven is known from the sign of the odd error signal.

Looking through the view finder of such a camera, the photographer aims the box delineating the focus area at the part of the image that he or she desires to be in focus, depresses the shutter release button half way, moves the camera to achieve the desired framing for the shot, and then depresses the shutter release button all the way, thereby actually exposing the image. Some of the more advanced cameras have several sub-image areas that are switched between by the camera using some algorithm. Some of the Canon cameras even attempt to track the eye position of the photographer to determine which of the predetermined sub-images to use for a particular exposure. Digital cameras have simply copied this style of auto-focus system, providing no advantage over their film counterpart.

WO 95/15054 discloses a still image camera, which comprises a light-tight housing, an image sensor arranged in the housing, an adjustable-focus lens with a focussing mechanism and a viewing screen. By means of a control circuitry it is possible to select only a portion of the image sensor such that only image information obtained by the selected image sensor portion are selected for display on the viewing screen. Further, It is possible to magnify an image provided by such a selected image sensor portion, which provides an electronic zoom function. For selecting a portion of the image sensor it is possible to employ user-operated selection disks or buttons in combination with a mouse ball. One draw back of this camera is that only Image information from a selected image sensor portion is provided to a user. This can represent a problem, because the user has to correlate the image presented on the viewing screen to a respective object being photographed by that camera. In particular, for large magnification ratios, the user is required to mentally and visually determine a relation of the magnified Image of an object with the real object.

### OBJECT OF THE INVENTION

It is an object of the present invention to provide an auto-focus system for a digital camera that operates on a subimage area selectable by the user such that a subimage presented to the user is provided in a manner which supports the user in correlating the presented sub-image of an object with the real object. Further, it is an object of the present invention to provide an auto-focus system for a digital camera that uses signals from an image sensor being used to capture an Image to also operate the focus motor without the requirement of a separate optical system or a sensor.

### SHORT DESCRIPTION

To solve the above objects, the present invention provides a digital camera according to claim 1 and a method according to claim 4.

In particular, the above objects are solved according to the present invention by presenting a subimage of a captured image as sub-area on a viewing screen, which is also used to display the remaining portions of the captured image.

### BRIEF DESCRIPTION OF THE DRAWING FIGURES

FIG. 1 is a schematic diagram of a front view of a viewfinder display for an electronic camera.

FIG. 2 is an image showing the appearance of the display employing the present invention.

FIG. 3 is a plot of focus metric as a function of lens focus setting.

FIG. 4 is a block diagram of a circuit for computing individual data points of the focus metric shown in FIG. 3.

FIG. 5 is a flow diagram is used to illustrate a method for performing autofocus according to the present invention.

FIG. 6 is a flow diagram of a process that may be used for calculating a new focus metric for use in the method of FIG. 5.

FIG. 7 is a flow diagram illustrating a process for setting an initial focus wheel increment for use in the method of FIG. 5.

FIG. 8 is a flow diagram illustrating a method for computing a fit to a parabolic error curve, and focusing at the estimated best position.

## DETAILED DESCRIPTION OF A PREFERRED EMBODIMENT

Persons of ordinary skill in the art will realize that the following description of the present invention is illustrative only and not in any way limiting. Other embodiments of the invention will readily suggest themselves to such skilled persons having the benefit of this disclosure.

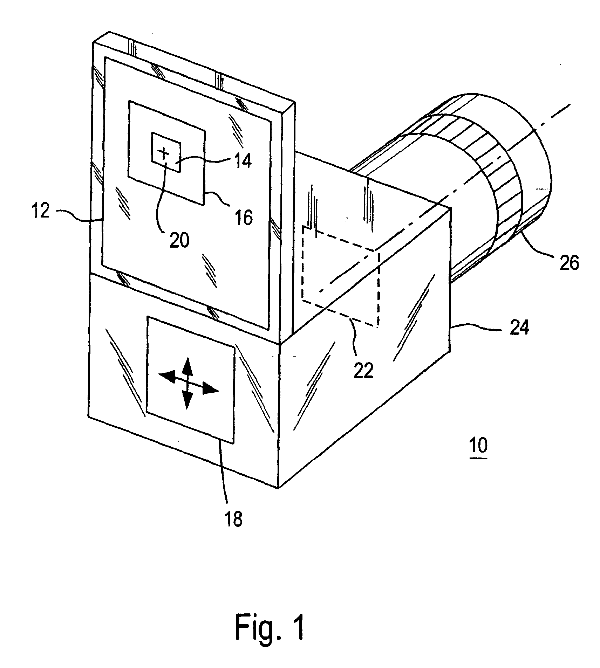

The present invention can be better understood with reference to FIG. 1, which shows, in schematic form, a view of a viewfinder display for an electronic camera 10. The main window 12 is used to display the entire image that is within the field of the electronic imaging array used to capture the image. Persons of ordinary skill in the art will understand that any high-quality imaging array will have much higher resolution than can be fully displayed on an electronic display small enough to fit on a portable camera, and hence only a small fraction of the actual pixels in the sensor array are addressed in order to produce the video stream used to form the image displayed in window 12. For example, a high-quality imaging system can be formed using three 2,000 by 2,000 pixel sensor chips attached to a color-separating prism as described in co-pending application serial No. 09/302,565, filed April 30, 1999, entitled "COLOR SEPARATION PRISMS HAVING SOLID-STATE IMAGERS MOUNTED THEREON AND CAMERA EMPLOYING SAME" Attorney's Docket No. FOV-031, assigned to the same assignee as the present invention.

A typical liquid-crystal viewfinder display has 512 by 512 pixels. To display a video image from the sensor array on the viewfinder screen, every fourth row of the sensor array is addressed, and every fourth pixel is outputted from each addressed row. In the present example where every fourth pixel is used, a 500 by 500 pixel displayed image is created, containing one 16th of the total number of pixels of the full 2,000 by 2,000 sensor array. This subsampling of the sensor array may be accomplished by addressing circuitry integrated on the sensor chip, as disclosed, for example, in co-pending application US 2002/0 018 600 A1, filed July 21, 1998, entitled "IMAGE SCANNING CIRCUITRY WITH ROW AND COLUMN ADDRESSING FOR USE IN ELECTRONIC CAMERAS" and assigned to the same assignee as the present invention. The advantage of creating the viewfinder image by on-chip subsampling of the sensor array is that the number of pixels to be read off the chip is reduced by a large factor (16 in the example just cited), thereby allowing a faster frame rate viewfinder to be implemented within the bandwidth limit of the readout system.

Referring again to FIG. 1, a selectable sub-area 14 of the image in the main window 12 is defined by the user by, for example, using a pointing device 18 like a touchpad, joystick, or the like to move and position a cursor-like target, cross-hairs, or other indicator (indicated at reference numeral 20) centered therein at a region of interest in an image. Sub-area 14 is selected by the user as an area of the image that is of particular interest, such as the eye of a person of which a photograph is to be taken. Because each photographic composition is unique, it is important that the region of interest be movable by the photographer. The present invention provides this feature, which is not available in the prior art.

In operation, the sub-area 14 is scanned out at full resolution, also using the addressing circuitry integrated on the sensor chip, as disclosed in co-pending application US 2002/0 018 600 A1. The pointing device 18 is centered by the user on a point of interest anywhere in the image. As will be readily understood by persons of ordinary skill in the art having the benefit of this disclosure and that of co-pending application US 2002/0 018 600 A1, the starting row and column addresses for sub-area 14 are easily derived from the row and column addresses of the position of the pointing device 14 defining the center of sub-area 14. The starting row address of the sub-area 14 is derived by subtracting half of the length (in rows) of the sub-area 14 from the row address of the position of the pointing device. The starting column address of the sub-area 14 is derived by subtracting half of the width (in columns) of the sub-area 14 from the column address of the position of the pointing device.

The result is a full-resolution image that, when displayed at viewfinder screen resolution, is larger than area 14. Using the numbers from the example system disclosed herein, the area required to display sub-area 14 on the screen at full resolution would be 4 times larger in each dimension, or 16 times larger in area, than the area defined as sub-area 14.

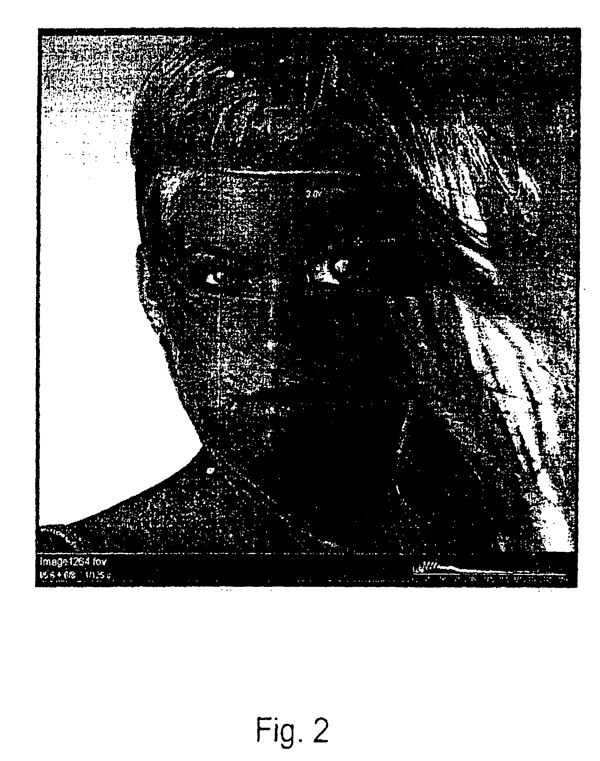

According to a presently preferred embodiment of the invention, the full-resolution version of area 14 is displayed as magnified area 16, centered on area 14, and replaces the corresponding image region on the original display. The visual impression created by this superposition is that of a magnifying glass or "loupe", expanding the portion of the image of sub-area 14 beneath it. The appearance of the display according to the present invention is shown on the image in FIG. 2. Magnification techniques have been used for material such as text or images stored in computer memory, but have not been used for magnifying a user-selectable sub-area of the live viewfinder image in a portable electronic camera as in the present invention. The ability to scan the high-resolution image sensors in two different modes interleaved in time is crucial to achieving the magnified sub-image without compromising performance. In the presently preferred embodiment of the present invention, this interleaving is achieved by storing the start and stop addresses and the addressing increment for each of the modes in control registers on the chip, as disclosed in co-pending application US 2002/0 018 600 A1, and toggling between them to retrieve the data in area 12 and sub-area 16.

The viewfinder may be mounted on camera 10 at a convenient location. As will be appreciated by persons of ordinary skill in the art, camera 10 focuses an image onto at least one imager array 22 located in light-tight enclosure 24 via lens 26. Lens 26 is a variable focus lens and is equipped with a focus motor to move the lens elements as is known in the art.

A second aspect of the present invention is to utilize the data displayed in sub-area 16 to drive the focus motor of the camera lens 26, thereby achieving an autofocus capability specifically within the region of interest selected by the photographer. Because sub-area 16 of the image has a small amount of data compared with the entire image in main window 12, it can be refreshed at a much higher rate.

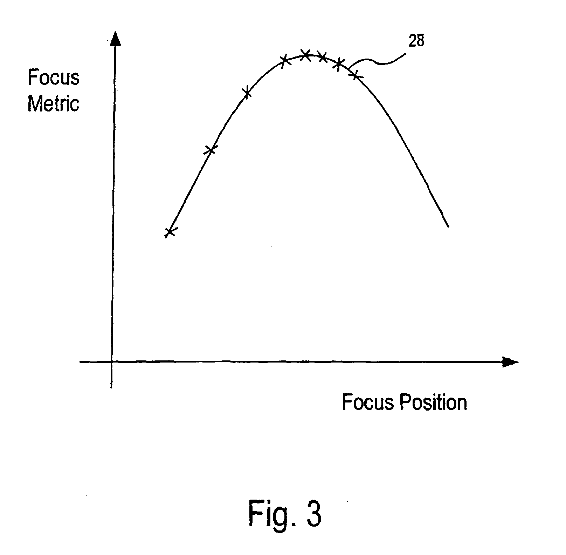

A high-resolution electronic imaging system located in the image plane of the camera lens does not provide an odd-error signal as required by prior-art camera auto-focus systems. There has been work on using even-error metrics of focus quality from imaging arrays to operate a focus system, as described, for example, in T. Delbruck, "A chip that focuses an image on itself", in Analog VLSI implementation of neural systems, C. Mead and M. Ismail, Eds., chapter 7, pp. 171-188. Kluwer Academic Publishers, Boston, 1989, Proceedings of a workshop on Analog Integrated Neural Systems. According to the present invention, an even-error metric of image quality is developed from the image itself, for example by taking the sum of the squares of first-difference of adjacent pixels over the area. A plot of this kind of focus metric as a function of lens focus setting is shown in FIG. 3. One of the individual data points for the focus metric is indicated at reference numeral 28.

According to the present invention as illustrated in FIG. 3, the measured function is fitted to a parabola, and the lens focus setting returned to the position of computed maximum (best focus). Although this kind of computation has been performed before, it has not been possible to accomplish in the context of a portable, high-resolution camera because it requires many images to be scanned out, each at a different lens focus setting. The time required to scan out a high-resolution image is of the order of one second, and thus scanning out many images could not result in a real-time auto-focus system. However, scanning out user-selected sub-image 16 at high resolution according to the present invention can be done in a small fraction of a second. The plurality of sub-images, each at a different lens focus setting, that is required for computing the point of best focus can be done within a second. Thus the present invention makes possible a real-time autofocus system that optimizes the focus in the area of the image selected by the user.

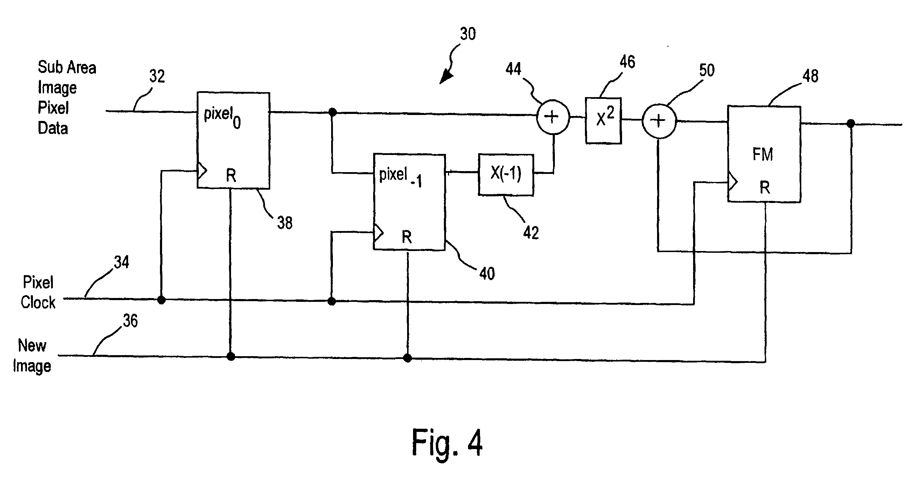

Referring now to FIG. 4, a block diagram is presented of a circuit 30 for performing an illustrative computation that determines individual data points of the focus metric shown in FIG. 3. The circuit 30 is driven by three lines. First, the pixel data stream is presented on line 32. The pixel clock is presented on pixel clock line 34. A New Image signal is presented on New Image line 36. A pixel0 register 38 is driven by the pixel data stream on line 32 and the pixel clock on line 34. Pixel0 register 38 is first cleared by New Image signal on line 36. The next clock pulse on pixel clock line 34 clocks the value of the current pixel (pixel0) into pixel0 register 38.

The second clock pulse on pixel clock line 34 clocks the value of the new current pixel (pixel0) into pixel0 register 38 and also clocks the most recent old current pixel (pixel-1) into pixel-1 register 40. Pixel-1 register 40 has also been cleared by New Image signal on line 36. The pixel-1 output of pixel-1 register 40 is multiplied by (-1) in multiplier 42 to change its sign and is then subtracted from the value of the current pixel0 in adder 44. The subtraction result is squared in unit 46.

The output of unit 46 is added to the output of focus-metric register 48 in adder 50. Persons of ordinary skill in the art will appreciate that focus-metric register 48 has also been cleared by the New Image signal on line 36. Therefore, focus-metric register 48 will contain the value zero after the first pixel clock pulse following assertion of the New Image signal on line 36. It will contain a value equal to the square of the value in pixel0 register 38 after the second pixel clock pulse following assertion of the New Image signal on line 36. It will contain a value equal to the sum of the squares of the first two pixel values only after the third pixel clock pulse following assertion of the New Image signal on line 36. After all of the pixel values for a sub-image have been clocked in, the output of focus-metric register 48 represents the sharpness of the sub-image. After the value has been read by some other register, the New Image signal is asserted on line 36 to reset all of the registers 38, 40 and 48 in circuit 30 and the next sub-image may be read into circuit 30. Circuit 30 assumes that each pixel value clocked in by the pixel clock is from a pixel adjacent to the previous pixel value clocked in and should not perform calculations on non-adjacent pixels, i.e., the last pixel on a line and the first pixel on the next line.

Persons of ordinary skill in the art will appreciate that circuit 30 can run in either of the horizontal and vertical lines of the sub-image, or that two such circuits 30 may be employed, one each on selected lines in the horizontal and vertical directions. Such skilled persons will also appreciate that the algorithm implemented by circuit 30 is not the only means for determining the focus of an image based upon pixel values. Another embodiment could filter the sub-image more through the use of an edge detect algorithm. Only pixels near the most defined edge could be run through such a system.

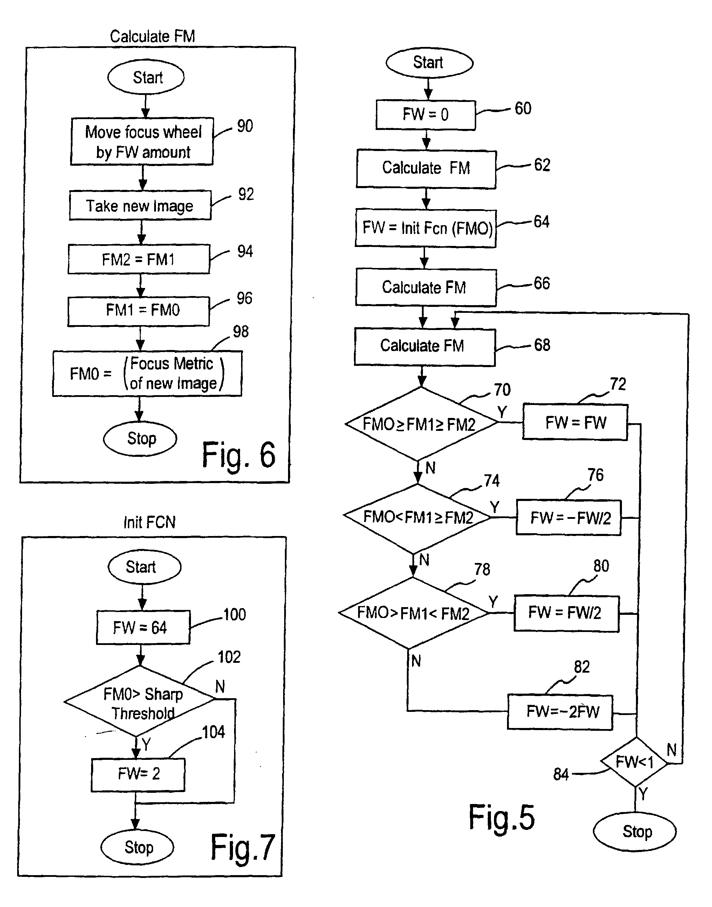

Referring now to FIG. 5, a flow diagram is used to describe an illustrative method for performing autofocus according to the present invention. The method of FIG. 5 searches for maximum image sharpness by obtaining focus metric values and moving the camera focus mechanism (referred to herein as the "focus wheel") to change lens focus based upon the three previous focus metric values. The system of FIG. 5 always tries to move the lens to achieve higher focus metric values based upon the focus metric history.

In the method illustrated in FIG. 5, the focus wheel increment value (FW) controlling how much the focus mechanism of the lens will be changed is initially set to zero at step 60. A first focus metric FM0 is then calculated (using, for example, circuit 30 of FIG. 4) at step 62. At step 64, the initial focus wheel increment value FW is set depending on whether or not the focus metric FM0 is greater than a sharpness threshold. The FW increment set in step 64 is explained in greater detail in FIG. 7.

Next, at step 66, a new focus metric FM0 is calculated by circuit 30 using the focus wheel increment value FW. At step 68, a new focus metric FM0 is again calculated by circuit 30 using the current focus wheel increment value FW. At step 70, the new focus metric calculated at step 68 is compared to the most recent focus metric FM1 (from step 66) and the next most recent focus metric FM2 (from step 62) to test whether the condition $FM0 \geq FM1 \geq FM2$ is true. Step 66 was repeated at step 68 so that there are non-zero values for FM1 and FM2 the first time that the test in step 70 is performed. If the condition $FM0 \geq FM1 \geq FM2$ is true, then the current focus setting resulting in focus metric FM0 is at least as good as the most recent focus setting that resulted in focus metric FM1 and the most recent focus setting is at least as good as the next-most-recent focus setting that resulted in focus metric FM2. This indicates that the focus wheel FW is incrementing in a direction towards optimum focus. Step 72 is then performed to maintain the focus wheel increment at its current value FW.

If $FM0 \geq FM1 \geq FM2$ is not true at step 70, the new focus metric calculated at step 68 is compared to the most recent focus metric FM1 and the next-most-recent focus metric FM2 at step 74 to test whether the condition $FM0 < FM1 \geq FM2$ is true. If the condition $FM0 < FM1 \geq FM2$ is true, then the current focus setting is worse than the most recent focus setting that resulted in focus metric FM1 and the most recent focus setting that resulted in focus metric FM1 was not worse than the next-previous focus setting that resulted in focus metric FM2. This means that the current focus setting FM0 has moved past the optimum focus setting. In this case, step 76 is then performed to set the focus wheel increment value FW to a new value equal to -FW/2 in order to reverse the focus wheel direction back towards the optimum focus point. The magnitude of the increment is set to an amount equal to half that of the previous increment in order to avoid overshooting the optimum focus point

If $FM0 < FM1 \geq FM2$ is not true, the new focus metric calculated at step 68 is compared to the most recent focus metric FM1 and the next-most-recent focus metric FM2 at step 78 to test whether the condition $FM0 > FM1 < FM2$ is true. If the condition $FM0 > FM1 < FM2$ is true, then the current focus setting is better than the previous focus setting that resulted in focus metric FM1 but the most recent focus setting that resulted in focus metric FM1 is not as good as the next-most-recent focus setting that resulted in focus metric FM2. This condition is typically true when a new focus metric has been calculated using the focus wheel increment value FW = -FW/2 following the condition $FM0 < FM1 > FM2$ and the current focus setting that resulted in focus metric FM0 has moved back towards the optimum focus setting. In this case, step 80 is then performed to set the focus wheel increment value FW to the value FW/2 to increment the focus wheel further towards the optimum point by half the previous increment to avoid overshoot.

If $FM0 > FM1 < FM2$ is not true, then the current focus setting is not as good as the most recent focus setting that resulted in the focus metric FM 1 and the most recent focus setting that resulted in the focus metric FM 1 was not as good as the next -most-recent focus setting that resulted in the focus metric FM2. This means that the initial focus setting FM2 was past the optimum focus setting and the focus settings FM1 and FM0 continue to move away from the optimum focus setting. In this case, step 82 is then performed to set the focus wheel increment FW to the value -2FW to reverse the focus wheel direction back towards the optimum point by a larger increment. This will reverse the sign (direction of travel) of the focus wheel increment value FW and bring the focus setting back to the setting that resulted in the focus metric FM2. As will be understood from an examination of FIG. 6, the focus wheel increment value will increment in a direction towards optimum focus the next time a focus metric is calculated.

After performance of any of steps 72, 76, 80, or 82, step 84 is performed to test whether the current focus wheel increment value FW is less than 1. If FW<1, then the optical system is close enough to an in-focus condition and the process stops. If not, the process returns to step 68 to calculate a new focus metric FM0.

Referring now to FIG. 6, a flow diagram is used to illustrate a method for calculating a new focus metric for use in the method of FIG. 5. First, at step 90, the focus wheel is moved by the increment FW. Next, at step 92, a new image is captured by the imager using the new focus setting. In steps 94, 96, and 98, respectively, the old FM2 value is replaced by the old FM1 value, the old FM1 value is replaced by the old FM0 value, and the old FM0 value is replaced by the FM value calculated for the newly-acquired image. As previously noted with respect to steps 66 and 68 of FIG. 5, these two steps are performed in order to provide initial non-zero values for FM1 and FM2.

Referring now to FIG. 7, an illustrative method is shown for selecting an initial focus wheel increment value FW to use in the process of FIG. 5. First, at step 100, FW is set equal to 64. Then at step 102, a determination is made whether the first FM0 calculated at step 62 is greater than a sharpness threshold. If not, the FW initialization ends with the value FW set to 64. If, however, the sharpness of the image FM0 was greater than the threshold, step 104 is performed to set the value FW to 2. Performance of this process strikes a balance between taking too much time to focus if the initial lens setting was significantly out of focus and using too large an FW increment and overshooting the optimal focus setting if the initial lens setting was close to optimum focus. By using the values 64 and 2, both of which are powers of 2, repeated performances of combinations of steps 76 and 80 will eventually reduce the value of FW to 0.5 to make the FW<1 condition of step 84 true to end the focus search algorithm of FIG. 5.

The method described in FIG. 5 is one of many possible methods of converging on a focus setting near the optimum. Ideally, it runs to completion, and stops after reducing the focus wheel increment (FW) to less than the minimum resolvable step of the lens motor (less than 1 in FIG. 5). If, however, the measurements of the focus metric (FM) are subject to noise, as would typically be the case, or if the subject is constantly in motion while running this method, then it is possible that the FW value will be successively halved and doubled many times as the method attempts to track the point of best focus. In this case, the method may not stop, or may not converge soon enough before the photographer snaps a picture. For such cases, it would be advantageous to fit a parabolic error curve to the recent FM values in order to compute a final FW increment that will drive the focus motor to an estimated best setting.

Whether the method of FIG. 5 is used, or some other method of sampling possible focus positions is used, it is therefore useful to be able to compute a final increment FW to drive the focus from its current setting to an estimated best focus setting.

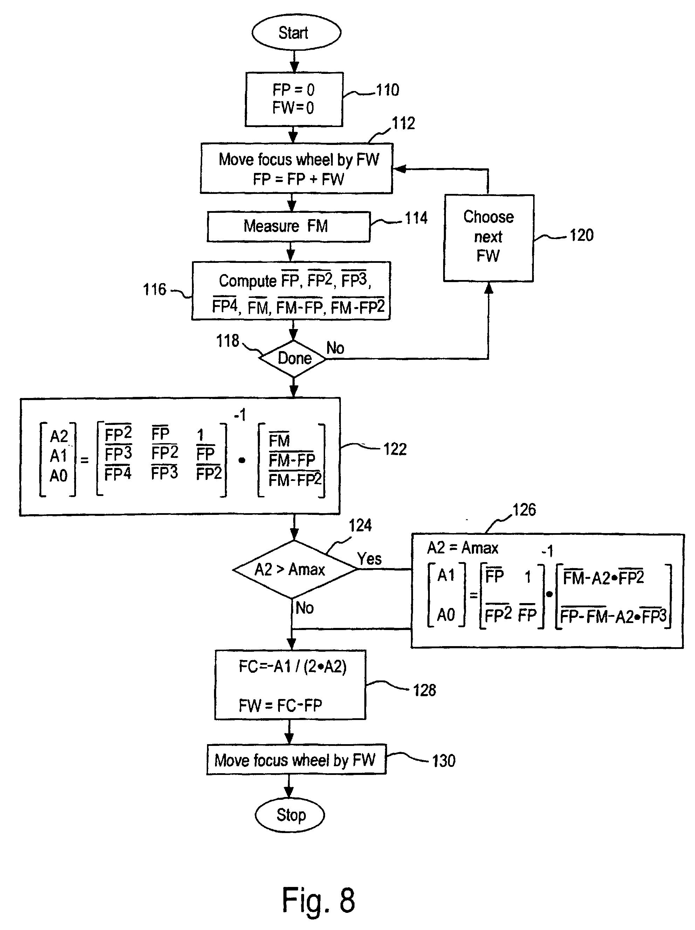

Referring now to FIG. 8, a flow diagram illustrates a method for computing a fit to a parabolic error curve, and focusing at the estimated best position. In a first step 110 FP and FW are set to zero. FP is a focus position value and FW is the focus wheel increment value. At step 112, the lens focus wheel is moved by an amount FW and the position FP is updated to reflect the new position by setting FP = FP + FW. At step 114, the focus metric FM is measured. Next, at step 116, the averages of the quantities FP, FP2, $FP^3$, $FP^4$, FM, FM*FP, and FM*$FP^2$ are calculated. At step 118, it is determined whether all data has been taken. If not, at step 120 a new FW is chosen. The steps "choose Next FW" and "done?" may be defined to correspond to the steps in the method of FIG. 5 or as like steps in some other focus tracking method. For example, the "done?" test may be answered by user input, such as letting go of an auto-focus button or pressing a shutter release, or it may be answered by the convergence of a tracking method such as that described with reference to FIG. 5.

If the decision in the "done?" step 120 is yes, the method proceeds to determine an estimate of a best focus position by fitting a parabolic error function to the measurements from the settings. Many methods of parameter estimation are known; for simplicity, the well-known method of least-squares curve fitting to find a parabola (a quadratic, the simplest error function that has even symmetry about its optimum) that best fits the last N data values is used, where N is a chosen number of points, typically 5 to 10. In order to compute the fit of the parabola, the focus positions, which are not explicit in the method of FIG. 5, need to be obtained. To do so, either the absolute positions can be read from an encoder attached to the lens motor, or if such a device is not available, the method can simply start with an arbitrary position of zero and accumulate the increments FW to keep track of relative focus position FP, as shown in the method of FIG. 8.

As is well known in the art, the computation of the best fit to a quadratic error function can be done incrementally, since it depends only on average values of the independent variable FP, the dependent variable FM, and products and powers thereof (means of FP, $FP^2$, $FP^3$, $FP^4$, FM, FM*FP, FM*$FP^2$). These averages can be computed as running averages of N points, or as exponentially weighted averages of points. Therefore, a focus-tracking method can stop and compute a final step FW at any time with little work.

According to the embodiment of the method shown in FIG. 8, a set of focus position (FP) values and focus metric (FM) values is used in steps 122 124, and 126 to compute the coefficients (A2, A1, and A0) of a best fitting quadratic function:

$$FM(FP) \sim = A2*FP^2 + A1*FP + A0$$

Equivalently, a parabola may be parameterized in terms of its center:

$$FM(FP) \sim= A2*(FP - FC)^2 + B0$$

where the parameter FC represents the focus-center or peak of the parabola in the focus-position dimension, and is given in step 128 by solving for the point where the first parameterization has zero slope:

$$FC = -A1/(2*A2)$$

The parameters A0 and B0 are not relevant to locating the best focus position but it is easiest to include them in the matrix solution to the least squares problem.

A further potential problem, in the case of a noisy focus metric, or in the case where there is little structure in the subject to focus upon, or in the case where the search has started near the optimum and moved only in very small increments, is that the estimated parabolic error function could be nearly flat across the region sampled, or even inverted, such that the position of the best focus could be severely mis-estimated. A solution to this problem is to do a constrained least-squares fit in which the curvature parameter A2 is constrained to be more negative than (less than) some negative limiting value Amax, which will force the parabola to have a narrow enough peak and the estimated center value FC to be within or near the sampled positions FP even when there is little or no information in the FM data. If Fig. 8, a fit to best values of A1 and A0 is computed with A2 fixed at Amax if the first computed value of A2 is not sufficiently negative.

Once the value of FC is determined in step 128, the lens can be returned to the position of best focus by setting FW = FC - FP as also shown at step 128 , where FP is the most recent focus position, and then incrementing the focus motor position by this final increment FW in step 130.

## Claims

1. A digital camera (10) comprising:

   a light-tight housing (24);
   at least one solid-state array image sensor (22) disposed in said housing (24);
   an adjustable-focus lens (26) having a focussing mechanism, said lens (26) being optically coupled to said solid-state array image sensor (22) through said housing (24);
   a viewing screen (12) coupled to said solid-state array image sensor (22) for viewing an image sensed by said solid-state array image sensor (22):

      a user-operated pointing device (18) that selects a point anywhere on said image;
      circuitry associated with said solid-state array image sensor (22) and responsive to said pointing device (18) for reading out a full-resolution subimage from said solid-state array image sensor (22), said full-resolution subimage including only pixels located within an area associated with said point on said image and for presenting said full-resolution subimage as a sub-area on said viewing screen (12), and

      **characterized by**
      said circuitry for displaying said full-resolution subimage as a magnified subimage in said image on said viewing screen (12).

2. The digital camera of claim 1, including:

   circuitry for processing pixels representing said area associated with said point on said image to derive focus data; and
   focussing means, coupled to said drcuitry, for driving said focussing mechanism in response to said focus data from said circuitry such that said image is focussed on said solid-state array image sensor (22) within a selected tolerance.

3. The digital camera of claim 2, wherein
   said focus data defines a focus parabola, and
   said selected tolerance is a focus-center peak of said focus parabola.

4. In a digital camera (10) having a light-tight housing (24), at least one solid-state array image sensor (22) disposed in the housing (24), an adjustable focus lens (26) having a focussing mechanism, the lens (26) being optically coupled to the solid-state array image sensor (22) through the housing (24), a viewing screen (12) coupled to the solid-state array image sensor (22) for viewing an image sensed by the solid-state array image sensor (22), and a user-operated pointing device (18) that selects a focus point on said viewing screen (12), a method for focussing an Image presented on the viewing screen (18), comprising:

   directing an image from the variable-focus lens (26) onto said at least one solid-state array image sensor (22);
   displaying said image on the viewing screen (12);
   sensing an output signal from the user-operated pointing device (18) identifying a point on said image on said viewing screen (12);
   defining a focus area associated with said point on said image on said viewing screen (12);
   reading a full-resolution subimage from the at least one solid-state array image sensor (22), said full-resolution subimage including only pixels within said focus area associated with said point on said viewing screen (18); and
   displaying said full-resolution subimage in said focus area on said viewing screen (18), **characterized by**
   displaying said full-resolution subimage as magnified subimage in said image on said viewing screen (18).

5. The method of daim 4, including
   performing an autofocus operation on said pixels that adjust the sharpness of said image from said variable-focus lens (26) onto said at least one solid-state array Image sensor (22).

**6.** The method of claim 5, wherein performing the autofocus operation comprises:

> processing said pixels representing said area associated with said point on said image to derive focus data; and
> driving the focussing mechanism of the lens (26) in response to said focus data such that said image is focussed on the at least one solid-state image sensor (22) within a selected tolerance.

**7.** The method of claim 6, wherein

> processing said focus data comprises processing said focus data to define a focus parabola and
> said selected tolerance is a focus-center peak of said focus parabola.

**Patentansprüche**

**1.** Digitale Kamera (10) mit:

> einem lichtdichten Gehäuse (24);
> mindestens einem im Gehäuse (24) angeordneten Festkörper-Matrixbildsensor (22);
> einer Linse (26) mit verstellbarem Fokus mit einem Fokussiermechanismus, wobei die Linse (26) optisch über das Gehäuse (24) mit dem Festkörper-Matrixbildsensor (22) gekoppelt ist;
> einem mit dem Festkörper-Matrixbildsensor (22) gekoppelten Bildschirm (12) zur Betrachtung eines vom Festkörper-Matrixbildsensor (22) erfassten Bildes;
> einem benutzerbetätigten Zeigegerät (18), das einen Punkt an beliebiger Stelle des Bildes auswählt;
> einer zum Festkörper-Matrixbildsensor (22) gehörigen und auf das Zeigegerät (18) ansprechenden Schaltung zum Auslesen eines Unterbildes mit voller Auflösung aus dem Festkörper-Matrixbildsensor (22), wobei das Unterbild mit voller Auflösung nur Bildpunkte enthält, die in einem zu diesem Punkt des Bildes gehörigen Bereich liegen, und zur Darstellung des Unterbildes mit voller Auflösung als Unterbereich auf dem Bildschirm (12); und

> **gekennzeichnet durch**
> die Schaltung zur Anzeige des Unterbildes mit voller Auflösung als vergrößertes Unterbild im Bild auf dem Bildschirm (12).

**2.** Digitale Kamera nach Anspruch 1, mit:

> einer Schaltung zur Verarbeitung von Bildpunkten, die den zum Punkt auf dem Bild gehörigen Bereich repräsentieren, um Fokusdaten abzuleiten; und
mit der Schaltung gekoppelte Fokussiereinrichtungen zum Treiben des Fokussiermechanismus als Antwort auf die Fokusdaten von der Schaltung in der Weise, dass das Bild auf dem Festkörper-Matrixbildsensor (22) innerhalb einer gewählten Toleranz fokussiert wird.

**3.** Digitale Kamera nach Anspruch 2, bei der
die Fokusdaten eine Fokusparabel definieren und die gewählte Toleranz ein Fokus-Scheitelwert der Fokusparabel ist.

**4.** In einer digitalen Kamera (10) mit einem lichtdichten Gehäuse (24), mindestens einem im Gehäuse (24) angeordneten Festkörper-Matrixbildsensor (22), einer Linse (26) mit verstellbarem Fokus mit einem Fokussiermechanismus, wobei die Linse (26) optisch über das Gehäuse (24) mit dem Festkörper-Matrixbildsensor (22) gekoppelt ist, einem mit dem Festkörper-Matrixbildsensor (22) gekoppelten Bildschirm (12) zur Betrachtung eines vom Festkörper-Matrixbildsensor (22) erfassten Bildes und einem benutzerbetätigten Zeigegerät (18), das einen Fokuspunkt auf dem Bildschirm (12) auswählt,
Verfahren zum Fokussieren eines auf dem Bildschirm (12) dargestellten Bildes, wobei das Verfahren aufweist:

> Anzeigen des Bildes auf dem Bildschirm (12);
> Erfassen eines Ausgangssignals vom benutzerbetätigten Zeigegerät (18), das einen Punkt des Bildes auf dem Bildschirm (12) identifiziert;
> Definieren eines zum Punkt des Bildes auf dem Bildschirm (12) gehörigen Fokusbereichs; Auslesen eines Unterbildes mit voller Auflösung aus dem mindestens einen Festkörper-Matrixbildsensor (22), wobei das Unterbild mit voller Auflösung nur innerhalb des zu diesem Punkt auf dem Bildschirm (12) gehörigen Bereichs liegende Bildpunkte enthält; und
> Anzeigen des Unterbildes mit voller Auflösung im Fokusbereich auf dem Bildschirm (12); **gekennzeichnet durch**
> Anzeigen des Unterbildes mit voller Auflösung als vergrößertes Unterbild im Bild auf dem Bildschirm (12).

**5.** Verfahren nach Anspruch 4, das die Durchführung einer Autofokusoperation mit den Bildpunkten enthält, bei der die Schärfe des Bildes von der Linse (26) mit verstellbaren Fokus auf den mindestens einen Festkörper-Matrixbildsensor (22) übertragen wird.

**6.** Verfahren nach Anspruch 5, bei dem die Durchführung der Autofokusoperation aufweist:

Verarbeiten der Bildpunkte, die den zum Punkt auf dem Bild gehörigen Bereich repräsentieren, um Fokusdaten abzuleiten; und
Treiben des Fokussiermechanismus der Linse (26) als Antwort auf die Fokusdaten in der Weise, dass das Bild auf dem mindestens einen Festkörper-Matrixbildsensor (22) innerhalb einer gewählten Toleranz fokussiert wird.

7. Verfahren nach Anspruch 6, bei dem
das Verarbeiten der Fokusdaten die Verarbeitung der Fokusdaten zur Definition einer Fokusparabel aufweist und
die gewählte Toleranz ein Fokus-Scheitelwert der Fokusparabel ist.

**Revendications**

1. Caméra numérique (10) comprenant:

un boîtier étanche à la lumière (24);
au moins un détecteur d'image à réseau à semi-conducteurs (22) disposé dans ledit boîtier (24);
une lentille focale réglable (26) ayant un mécanisme de mise au point, ladite lentille (26) étant couplée optiquement audit détecteur d'image à réseau à semi-conducteurs (22) au moyen dudit boîtier (24);
un écran de visualisation (12) couplé audit détecteur d'image à réseau à semi-conducteurs (22) pour la visualisation d'une image captée par ledit détecteur d'image à réseau à semi-conducteurs (22):

un dispositif de pointage commandé par l'utilisateur (18) qui sélectionne un point quelque part sur ladite image;
des circuits associés audit détecteur d'image à réseau à semi-conducteurs (22) et sensibles audit dispositif de pointage (18) pour l'extraction d'une sous-image à pleine résolution dudit détecteur d'image à réseau à semi-conducteurs (22), ladite sous-image à pleine résolution comprenant uniquement des pixels situés à l'intérieur d'une zone associée audit point sur ladite image et pour la présentation de ladite sous-image à pleine résolution comme sous-zone sur ledit écran de visualisation (12) et

**caractérisée par** lesdits circuits pour l'affichage de ladite sous-image à pleine résolution comme sous-image grossie dans ladite image sur ledit écran de visualisation (12).

2. Caméra numérique selon la revendication 1, comprenant:

des circuits pour le traitement des pixels représentant ladite zone associée audit point sur ladite image pour extraire des données de mise au point;
et des moyens de mise au point, couplés auxdits circuits, pour entraîner ledit mécanisme de mise au point en réponse auxdites données de mise au point desdits circuits, de sorte que ladite image est mise au point sur ledit détecteur d'image à réseau à semi-conducteurs (22) à l'intérieur d'une tolérance sélectionnée.

3. Caméra numérique selon la revendication 2, dans laquelle
lesdites données de mise au point définissent une parabole focale, et
ladite tolérance sélectionnée est un pic de centre focal de ladite parabole focale.

4. Caméra numérique (10) ayant un boîtier étanche à la lumière (24), au moins un détecteur d'image à réseau à semi-conducteurs (22) disposé dans le boîtier (24), une lentille focale réglable (26) ayant un mécanisme de mise au point, la lentille (26) étant optiquement couplée au détecteur d'image à réseau à semi-conducteurs (22) au moyen du boîtier (24), un écran de visualisation (12) couplé au détecteur d'image à réseau à semi-conducteurs (22) pour la visualisation d'une image détectée par le détecteur d'image à réseau à semi-conducteurs (22), et un dispositif de pointage commandé par l'utilisateur (18) qui sélectionne un point focal sur ledit écran de visualisation (12), un procédé pour la mise au point d'une image présentée sur l'écran de visualisation (18), comprenant:

l'orientation d'une image provenant de la lentille focale variable (26) sur ledit au moins un détecteur d'image à réseau à semi-conducteurs (22);
l'affichage de ladite image sur l'écran de visualisation (12);
la détection d'un signal de sortie issu du dispositif de pointage commandé par l'utilisateur (18) identifiant un point sur ladite image sur ledit écran de visualisation (12);
la définition d'une zone focale associée audit point sur ladite image sur ledit écran de visualisation (12);
la lecture d'une sous-image à pleine résolution provenant de l'au moins un détecteur d'image à réseau à semi-conducteurs (22), ladite sous-image à pleine résolution comprenant uniquement des pixels à l'intérieur de ladite zone focale associée audit point sur ledit écran de visualisation (18); et

l'affichage de ladite sous-image à pleine résolution dans ladite zone focale sur ledit écran de visualisation (18), **caractérisée par**

l'affichage de ladite sous-image à pleine résolution sous forme d'image grossie dans ladite image sur ledit écran de visualisation (18).

5. Procédé selon la revendication 4, comprenant la réalisation d'une opération de mise au point automatique sur lesdits pixels qui règlent la définition de ladite image provenant de ladite lentille à focale variable (26) sur ledit au moins un détecteur d'image à réseau à semi-conducteurs (22).

6. Procédé selon la revendication 5, dans lequel la réalisation de l'opération de mise au point automatique comprend:

le traitement desdits pixels représentant ladite zone associée audit point sur ladite image pour extraire les données de mise au point; et l'entraînement du mécanisme de mise au point de la lentille (26) en réponse auxdites données de mise au point, de sorte que ladite image est mise au point sur l'au moins un détecteur d'image à réseau à semi-conducteurs (22) à l'intérieur d'une tolérance sélectionnée.

7. Procédé selon la revendication 6, dans lequel le traitement desdites données de mise au point comprend le traitement desdites données de mise au point pour définir une parabole focale et ladite tolérance sélectionnée est un pic de centre focal de ladite parabole focale.

Fig. 1

Fig. 2

Focus
Metric

Focus Position

Fig. 3

Fig. 4

EP 1 188 309 B1

Calculate FM

Start

Move focus wheel
by FW amount — 90

Take new Image — 92

FM2 = FM1 — 94

FM1 = FM0 — 96

$FM0 = \begin{pmatrix} \text{Focus Metric} \\ \text{of new Image} \end{pmatrix}$ — 98

Stop

Fig. 6

Init FCN

Start

FW = 64 — 100

FM0 > Sharp
Threshold — 102    N

FW = 2 — 104    Y

Stop

Fig.7

Start

FW = 0 — 60

Calculate FM — 62

FW = Init Fcn (FMO) — 64

Calculate FM — 66

Calculate FM — 68

FMO ≥ FM1 ≥ FM2 — 70    Y    FW = FW — 72

N

FMO < FM1 ≥ FM2 — 74    Y    FW = −FW/2 — 76

N

FMO > FM1 < FM2 — 78    Y    FW = FW/2 — 80

N

FW = −2FW — 82

FW < 1 — 84    N

Y

Stop

Fig.5

Fig. 8